Europäisches Patentamt

European Patent Office

Office européen des brevets

(19)

(11) Numéro de publication: **0 512 914 B1**

## FASCICULE DE BREVET EUROPEEN

(12)

(45) Date de publication de fascicule du brevet: **09.08.95** (51) Int. Cl.⁶: **C10G 47/16**, **B01J 29/04**

(21) Numéro de dépôt: **92401256.0**

(22) Date de dépôt: **04.05.92**

(54) **Utilisation, dans un procédé d'hydrocraquage d'une charge hydrocarbonée, d'un catalyseur comprenant un phosphate de gallium substitué.**

(30) Priorité: **06.05.91 FR 9105675**

(43) Date de publication de la demande:
**11.11.92 Bulletin 92/46**

(45) Mention de la délivrance du brevet:
**09.08.95 Bulletin 95/32**

(84) Etats contractants désignés:
**BE DE ES GB IT NL**

(56) Documents cités:
EP-A- 0 147 991     EP-A- 0 158 349
EP-A- 0 158 976     EP-A- 0 226 219
EP-A- 0 293 919     EP-A- 0 306 050
EP-A- 0 417 863

(73) Titulaire: **INSTITUT FRANCAIS DU PETROLE**
**4, Avenue de Bois Préau**
**F-92502 Rueil-Malmaison (FR)**

(72) Inventeur: **Guth, Jean-Louis**
**59, rue Bellevue Brunstatt**
**F-68200 Mulhouse (FR)**
Inventeur: **Joly, Jean-François**
**20, rue Béranger**
**F-75003 Paris (FR)**
Inventeur: **Kessler, Henri**
**17, rue de la Forêt**
**F-68270 Wittenheim (FR)**
Inventeur: **Chapus, Thierry**
**17 rue Cramail,c/o Mr. et Mme Fourtanier**
**F-92500 Rueil Malmaison (FR)**
Inventeur: **Mignard, Samuel**
**22, avenue Guy de Maupassant**
**F-78400 Chatou (FR)**

Rank Xerox (UK) Business Services
(3.10/3.09/3.3.3)

**Description**

La présente invention concerne l'utilisation en hydroconversion de coupes pétrolières lourdes d'un catalyseur comprenant un phosphate de gallium substitué, associé à une matrice habituellement amorphe ou mal cristallisée et éventuellement à une zéolithe Y de structure faujasite.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité. En revanche, l'essence produite présente un indice d'octane beaucoup plus faible que celle issue du craquage catalytique.

Les catalyseurs utilisés en hydrocraquage sont tous du type bifonctionnels associant une fonction acide à une fonction hydrogénante. La fonction acide est apportée par des supports de grandes surfaces (150 à 800 $m^2.g^{-1}$ généralement) présentant une acidité superficielle, telles que les alumines halogénées (chlorées ou fluorées notamment), les combinaisons d'oxydes de bore et d'aluminium, les silices-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que chrome, molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390°C environ), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs très actifs mais présentant une mauvaise sélectivité en distillats moyens. Il est donc possible, en choisissant judicieusement chacune des fonctions d'ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur

Les catalyseurs conventionnels de l'hydrocraquage catalytique sont, pour leur grande majorité, constitués de supports faiblement acides, tels les silice-alumines amorphes par exemple. Ces systèmes sont utilisés pour produire des distillats moyens de très bonne qualité, ou encore, lorsque leur acidité est très faible, des bases huiles.

Dans les supports peu acides, on trouve la famille des silice-alumines amorphes. Beaucoup de catalyseurs du marché de l'hydrocraquage sont constitués de silice-alumine associée, soit à un métal du groupe VIII soit, de préférence quand les teneurs en poisons hétéroatomiques de la charge à traiter dépassent 0.5% en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les importants travaux de recherche effectués par le demandeur sur de nombreuses zéolithes et solides microporeux cristallisés tels les phosphates d'aluminium et les phosphates de gallium substitués, l'ont conduit à découvrir que, de façon surprenante, un catalyseur contenant un phosphate de gallium microporeux cristallisé susbstitué avec un hétéroatome choisi dans le groupe constitué par les éléments : Li, Be, Co, Mg, Mn, Zn, Al, B, Cr, Fe, Ge, Si, Ti, As, et V, et éventuellement une zéolithe Y de structure faujasite, permet d'obtenir une sélectivité en distillats moyens nettement améliorée par rapport aux catalyseurs connus dans l'art antérieur.

Le phosphate de gallium et ses dérivés substitués sont caractérisés par :
a) la formule générale approchée suivante :

$$R_r\ Ga_g\ P_p\ X_x\ O_2\ F_f,\ h\ H_2O$$

où la somme de g, p et x est égale à 1, et où :
g est un nombre compris entre 0,3 et 0,5, et de préférence entre 0,4 et 0,5,
p est un nombre compris entre 0,3 et 0,5,

2

EP 0 512 914 B1

x est un nombre compris entre 0 et 0,4, et de préférence entre 0 et 0,2,
r est un nombre compris entre 0,01 et 0,2
f est un nombre compris entre 0,01 et 0,2
h varie suivant le degré d'hydratation du solide entre 0 et 0,5.

R est un composé organique, choisi dans le groupe formé par les amines cycliques, de préférence la quinuclidine,

X est un hétéroatome choisi dans le groupe formé par les éléments : Li, Be, Co, Mg, Mn, Zn, Al, B, Cr, Fe, Ge, Si, Ti, As, et V, de préférence Si,

b) un diagramme de diffraction des rayons X représenté dans le tableau 1.

L'identification du phosphate de gallium cristallisé microporeux se fait de manière commode à partir de son diagramme de diffraction des rayons X. Ce diagramme est obtenu à l'aide d'un diffractomètre en utilisant la méthode classique des poudres avec le rayonnement K alpha du cuivre. A partir de la position des pics de diffraction représentée par l'angle 2 théta, on calcule, par la relation de Bragg, les équidistances réticulaires $d_{hkl}$ caractéristiques de l'échantillon.

L'estimation de l'erreur de mesure ($d_{hkl}$) sur hkl se calcule en fonction de l'erreur absolue (2O) affectée à la mesure de 2O par la relation de Bragg. Une erreur absolue (2O) égale à ± 0,05° est communément admise. L'intensité $I_{rel}$ affectée à chaque valeur de $d_{hkl}$ est mesurée d'après la hauteur du pic de diffraction correspondant.

Le dépouillement du diagramme de diffraction des rayons X présenté dans le tableau 1 de la présente description est représentatif du diagramme de diffraction du phosphate de gallium et de ses dérivés substitués.

TABLEAU 1

| 20 (°) | d$_{hkl}$ (A) | I$_{rel}$. |
|---|---|---|
| 3,4 - 3,6 | 25,9 - 24,5 | mf à m |
| 4,7 - 4,9 | 18,7 - 18,0 | f à mf |
| 5,9 - 6,1 | 14,9 - 14,4 | mf à m |
| 6,8 - 7,0 | 12,9 - 12,6 | f à mf |
| 7,4 - 7,6 | 11,9 - 11,6 | tf à f |
| 8,2 - 8,3 | 10,7 - 10,6 | mf à m |
| 8,3 - 8,6 | 10,6 - 10,5 | tf à f |
| 9,6 - 9,8 | 9,7 - 9,2 | TF |
| 10,1 - 10,3 | 8,75 - 8,58 | m à F |
| 11,3 - 11,5 | 7,82 - 7,68 | tf à f |
| 11,8 - 12 | 7,49 - 7,36 | mf à mF |
| 12,3 - 12,5 | 7,18 - 7,07 | tf à f |
| 12,8 - 13,0 | 6,91 - 6,80 | tf à f |
| 13,6 - 13,8 | 6,50 - 6,41 | f à mf |
| 14 - 14,2 | 6,32 - 6,23 | m à mF |
| 14,4 - 14,6 | 6,14 - 6,06 | tf à f |
| 15,2 - 15,4 | 5,82 - 5,74 | tf à f |
| 15,6 - 15,8 | 5,67 - 5,60 | tf à f |
| 16 - 16,2 | 5,53 - 5,46 | tf à f |

| | | |
|---|---|---|
| 16,7 - 16,9 | 5,30 - 5,24 | tf à f |
| 17 - 17,2 | 5,21 - 5,15 | tf à f |
| 17,4 - 17,6 | 5,09 - 5,03 | tf à f |
| 17,7 - 17,9 | 5,00 - 4,95 | tf à f |
| 18,4 - 18,6 | 4,81 - 4,76 | f à mf |
| 18,7 - 18,9 | 4,74 - 4,69 | tf à f |
| 19,4 - 19,6 | 4,57 - 4,52 | tf à f |
| 19,6 - 19,8 | 4,52 - 4,48 | tf à f |
| 20,5 - 20,7 | 4,32 - 4,28 | mf à mF |
| 20,8 - 21,0 | 4,26 - 4,22 | tf à f |
| 21,1 - 21,3 | 4,20 - 4,16 | f à mf |
| 21,4 - 21,6 | 4,14 -4,11 | tf à f |
| 21,7 - 21,9 | 4,09 - 4,05 | tf à f |
| 22,0 - 22,2 | 4,03 - 4,00 | tf à f |
| 22,3 - 22,4 | 3,98 - 3,95 | tf à f |
| 22,4 - 22,6 | 3,95 - 3,93 | tf à f |
| 22,7 - 22,9 | 3,91 - 3,88 | tf à f |
| 23,0 - 23,2 | 3,86 - 3,83 | tf à f |
| 23,3 - 23,5 | 3,81 - 3,78 | tf à f |
| 23,9 - 24,1 | 3,71 - 3,68 | f à mf |
| 24,2 - 24,4 | 3,67 - 3,64 | f à mf |

| | | |
|---|---|---|
| 24,5 - 24,7 | 3,63 - 3,60 | f à mf |
| 24,8 - 25,0 | 3,58 - 3,55 | f à mf |
| 25,0 - 25,2 | 3,55 - 3,53 | tf à f |
| 25,3 - 25,5 | 3,51 - 3,49 | tf à f |
| 25,6 - 25,8 | 3,47 - 3,45 | tf à f |
| 25,9 - 26,1 | 3,43 - 3,41 | f à mf |
| 26,4 - 26,6 | 3,37 - 3,34 | f à mf |
| 27,1 - 27,2 | 3,29 - 3,27 | f à mf |
| 27,6 - 27,8 | 3,22 - 3,20 | tf à f |
| 27,9 - 28,10 | 3,19 - 3,17 | tf à f |
| 28,4 - 28,6 | 3,13 - 3,11 | f à mf |
| 28,7 - 28,9 | 3,10 - 3,08 | mf à mF |
| 29,2 - 29,4 | 3,05 - 3,03 | tf à f |
| 29,6 - 29,8 | 3,01 - 2,995 | tf à f |
| 30,2 - 30,4 | 2,956 - 2,937 | tf à f |
| 30,5 - 30,7 | 2,928 - 2,909 | tf à f |
| 31,0 - 31,2 | 2,882 - 2,864 | f à mf |
| 32,0 - 32,2 | 2,794 - 2,777 | tf à f |
| 32,7 - 32,9 | 2,736 - 2,720 | tf à f |
| 33,3 - 33,5 | 2,688 - 2,672 | tf à f |
| 34,7 - 34,9 | 2,582 - 2,568 | tf à f |

| 35,4 – 35,6 | 2,533 – 2,519 | tf à f |
|---|---|---|
| 38,3 – 38,5 | 2,348 – 2,336 | tf à f |
| 43,1 – 43,3 | 2,096 – 2,087 | tf à f |
| 44,9 – 45,1 | 2,017 – 2,008 | tf à f |
| 48,0 – 48,2 | 1,893 – 1,886 | tf à f |

**TF : très fort, F : fort, mF : moyen fort, m : moyen, mf : moyen faible, f : faible, tf : très faible**

Le procédé de préparation du phosphate de gallium et de ses dérivés substitués, synthétisés en milieu fluorure consiste en ce que :

a) on forme un mélange réactionnel qui renferme au moins les composés suivants: l'eau, au moins une source de gallium, au moins une source de phosphore, éventuellement au moins une source d'un hétéroatome X choisi dans le groupe formé par les éléments : Li, Be, Co, Mg, Mn, Zn, Al, B, Cr, Fe, Ge, Si, Ti, As, et V, de préférence Si, au moins une source d'au moins un composé organique, au moins une source d'anions fluorures et éventuellement au moins une source d'au moins un composé acide ou basique pour ajuster le pH du milieu réactionnel à la valeur désirée, le pH du milieu réactionnel étant compris entre 3 et 8 et ledit mélange réactionnel ayant la composition, en termes de rapport molaire, suivante :

$$r'R : Ga_2O_3 : p'P_2O_5 : x'XO_{n/2} : f'F : h'H_2O$$

où r' est un nombre compris entre 1 et 10, de préférence entre 5 et 10,

où p' est un nombre compris entre 0,3 et 1, de préférence entre 0,5 et 1,

où x' est un nombre compris entre 0 et 1,5, de préférence entre 0 et 1,

où f' est un nombre compris entre 0,1 et 4, de préférence entre 0,3 et 2,

où h' est un nombre compris entre 1 et 500, de préférence entre 30 et 100,

où R est un composé organique, choisi dans le groupe formé par les amines cycliques, de préférence la quinuclidine,

où n est le degré d'oxydation de l'hétéroatome X,

b) on maintient ledit mélange réactionnel à une température de chauffage supérieure à 40 °C jusqu'à ce que l'on obtienne un composé cristallin.

Les anions fluorures peuvent être introduits sous forme d'acide fluorhydrique ou de ses sels. Ces sels sont formés avec des métaux alcalins, l'ammonium ou de préférence avec le composé organique utilisé. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$ ou de sodium $Na_2SiF_6$ ; on utilise de préférence le tétrafluorure de silicium $SiF_4$.

Le composé organique est une amine cyclique. On utilise de préférence la quinuclidine.

Parmi les sources de gallium, on peut utiliser les oxydes et hydroxydes de gallium, comme GaOOH, les alkoxydes de gallium de formule $Ga(OR_1)_3$ où $R_1$ est un radical alkyle, les sels de gallium comme le fluorure de gallium, le phosphate de gallium ou le sulfate de gallium. On utilise de préférence le sulfate de gallium.

De nombreuses sources d'hétéroatomes peuvent être employées. Ainsi, dans le cas du silicium, on peut utiliser un hydrogel, un aérogel ou une suspension colloïdale, les oxydes de précipitation, les oxydes provenant de l'hydrolyse d'esters tels que l'orthosilicate d'éthyle $Si(OEt)_4$ ou les oxydes provenant de l'hydrolyse de complexes comme le fluorosilicate d'ammonium $(NH_4)_2SiF_6$ ou de sodium $Na_2SiF_6$.

La source de phosphore préférée est l'acide phosphorique $H_3PO_4$, mais ses sels et esters comme les phosphates alcalins, les phosphates de gallium ou les phosphates d'alkyles conviennent également.

Les acides ou sels d'acides, les bases ou sels basiques servant éventuellement à ajuster le pH du milieu réactionnel à la valeur souhaitée peuvent être choisis parmi les acides usuels, tels que par exemple l'acide chlorhydrique, l'acide sulfurique, l'acide nitrique ou l'acide acétique, les sels acides comme l'hydrogénofluorure d'ammonium ou l'hydrogénosulfate de sodium, les bases courantes usuelles comme l'ammoniaque ou l'hydroxyde de sodium et les bases azotées comme la méthylamine. Des mélanges tampons tels que le tampon acétate (acide acétique - acétate de sodium) ou le tampon ammoniacal (ammoniaque - chlorure d'ammonium) conviennent également.

La première étape du procédé de synthèse du catalyseur utilisé selon l'invention consiste à réaliser le mélange réactionnel comprenant l'eau, la source de gallium, la source de phosphore, éventuellement la source de l'hétéroatome X, la source d'anions fluorures, le composé organique, éventuellement une source de cations complémentaire pour la compensation des charges de la charpente et éventuellement au moins un composé acide ou basique. Le composé organique et le composé acide ou basique sont généralement ajoutés en dernier pour permettre l'ajustement du pH à la valeur désirée.

La seconde étape dudit procédé de synthèse consiste en la cristallisation du mélange réactionnel formé dans la première étape. Elle s'effectue en chauffant le mélange réactionnel à une température comprise entre 40 et 250 °C, de préférence entre 60 et 220 °C sous pression autogène. On utilise de préférence un récipient bouché en polypropylène ou un autoclave intérieurement revêtu d'un matériau polymère, en général du polytétrafluoroéthylène, pour les températures inférieures à 100 °C et supérieures à 100 °C respectivement.

La durée du chauffage du mélange réactionnel nécessaire à la cristallisation dépend de la composition du mélange réactionnel et de la température de réaction.

La taille et la cinétique de formation des cristaux peuvent être modifiées par introduction dans le milieu réactionnel de germes constitués par des cristaux, éventuellement broyés, du phosphate de gallium et de ses dérivés substitués et par l'agitation en cours de cristallisation.

Après cristallisation, le phosphate de gallium cristallisé microporeux est séparé des eaux mères par filtration ou centrifugation, lavé à l'eau distillée et séché à l'air à 40 °C. Le solide ainsi obtenu contient occlus dans ses cavités le composé organique introduit dans le milieu réactionnel. Ce dernier est associé d'une part au fluorure et d'autre part joue le rôle de cation de compensation de la charge négative de la charpente résultant de l'incorporation de l'hétéroatome X dans la charpente cristallisée. En plus du composé organique, le phosphate de gallium peut contenir au sein de ses cavités de l'eau d'hydratation et des cations de compensation minéraux si les cations organiques ne sont pas en nombre suffisant. La déshydratation du solide selon l'invention peut être effectuée par chauffage à 150 °C.

Le phosphate de gallium et ses dérivés substitués ainsi préparés peuvent être débarrassés des composés organiques présents au sein des cavités après l'étape de synthèse par traitement de calcination à une température supérieure à 200 °C et de préférence comprise entre 350 et 450 °C.

Le phosphate de gallium microporeux cristallisé et ses dérivés substitués utilisés dans la présente invention sont caractérisés par les propriétés suivantes :

a) la formule générale approchée suivante :

$$R_r \, Ga_g \, P_p \, X_x \, O_2 \, F_f, \, h \, H_2O$$

où la somme de g, p et x est égale a 1, et où :

g est un nombre compris entre 0,3 et 0,5, et de préférence entre 0,4 et 0,5,

p est un nombre compris entre 0,3 et 0,5,

x est un nombre compris entre 0,01 et 0,4, et de préférence entre 0,01 et 0,2,

r est un nombre compris entre 0,01 et 0,2

f est un nombre compris entre 0,01 et 0,2

h varie suivant le degré d'hydratation du solide entre 0 et 0,5

R est un composé organique, choisi dans le groupe formé par les amines cycliques, de préférence la quinuclidine,

X est un hétéroatome choisi dans le groupe formé par les éléments : Li, Be, Co, Mg, Mn, Zn, Al, B, Cr, Fe, Ge, Si, Ti, As, et V, de préférence Si,

b) un diagramme de diffraction des rayons X présenté dans le tableau 1.

Le catalyseur utilisé dans la présente invention comprend une matrice à base d'alumine, de préférence ne contenant pas de zéolithe, et au moins un métal ayant une fonction hydro-déshydrogénante. Ladite matrice peut également renfermer de la silice-alumine, de l'oxyde de bore, de la magnésie, de la zircone, de l'oxyde de titane, de l'argile ou une combinaison de ces oxydes. La fonction hydro-déshydrogénante est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et VIII est comprise entre 5 et 40% en poids et de préférence entre 7 et 30% en poids et le rapport pondéral exprimé en oxyde métallique en métal (ou métaux) du groupe VI sur métal (ou métaux) du groupe VIII est compris entre 1.25 et 20 et de préférence entre 2 et 10. De plus, ce catalyseur peut contenir du phosphore. La teneur en phosphore, exprimée en concentration en oxyde de phosphore $P_2O_5$, sera inférieure à 15% en poids et de préférence inférieure à 10% en poids.

Le catalyseur utilisé dans la présente invention peut renfermer une zéolithe Y de structure faujasite (Zeolite Molecular Sieves Structure, chemistry and uses, D.W. BRECK, J. WILLEY and Sons 1973). Parmi les zéolithes Y que l'on peut utiliser, on emploiera de préférence une zéolithe Y stabilisée, couramment appelée ultrastable ou USY soit sous forme au moins partiellement échangée avec des cations métalliques, par exemple des cations des métaux alcalino-terreux et/ou des cations de métaux de terres rares de numéro atomique 57 à 71 inclus, soit sous forme hydrogène.

Le catalyseur utilisé dans la présente invention renferme également au moins une matrice habituellement amorphe ou mal cristallisée choisie par exemple dans le groupe formé par l'alumine, la silice, la magnésie, l'argile, l'oxyde de titane, la zircone, les phosphates d'aluminium, de titane ou de zirconium, les combinaisons de deux au moins de ces composés et les combinaisons alumine-oxyde de bore.

La matrice est de préférence choisie dans le groupe formé par la silice, l'alumine, la magnésie, les combinaisons silice-alumine, les combinaisons silice-magnésie et l'argile. Finalement, le catalyseur utilisé dans la présente invention renferme :

a) de 20 à 95%, de préférence de 30 à 85% et de manière encore plus préférée de 50 à 80% en poids d'au moins une matrice,

b) de 1 à 60%, de préférence de 4 à 50% et de manière encore plus préférée de 10 à 40% en poids d'au moins un phosphate de gallium microporeux cristallisé substitué par un élément choisi dans le groupe formé par les éléments : Li, Be, Co, Mg, Mn, Zn, Al, B, Cr, Fe, Ge, Si, Ti, As, et V, de préférence Si, et caractérisé par la formule générale approchée et le diagramme de diffraction des rayons X donnés précédemment,

c) de 0 à 30%, de préférence de 0 à 20% et de manière encore plus préférée de 0 à 10% d'au moins une zéolithe Y de structure faujasite, forme hydrogène, ayant les caractéristiques données ci-avant.

d) au moins un métal du groupe VIII de la classification périodique des éléments.

Le catalyseur utilisé selon l'invention peut renfermer en outre au moins un métal du groupe VI de la classification périodique des éléments.

Le catalyseur utilisé dans la présente invention peut être préparé par toutes les méthodes bien connues de l'homme du métier. Une des méthodes préférées dans la présente invention consiste à malaxer le phosphate de gallium microporeux cristallisé substitué par un élément choisi dans le groupe formé par les éléments : Li, Be, Co, Mg, Mn, Zn, Al, B, Cr, Fe, Ge, Si, Ti, As et V, de préférence Si, et éventuellement une zéolithe Y dans un gel humide d'alumine pendant quelques dizaines de minutes, puis à passer la pâte ainsi obtenue à travers une filière pour former des extrudés de diamètre compris entre 0.4 et 4 mm.

La fonction hydrogénante telle qu'elle a été définie précédemment (métaux du groupe VIII ou association d'oxydes de métaux des groupes VI et VIII) peut être introduite dans le catalyseur à divers niveaux de la préparation et de diverses manières.

Elle peut être introduite en partie seulement (cas des associations d'oxydes de métaux des groupes VI et VIII) ou en totalité au moment du malaxage du phosphate de gallium microporeux cristallisé substitué avec le gel d'oxyde choisi comme matrice. Elle peut être introduite par une ou plusieurs opérations d'échange ionique sur le support calciné constitué du phosphate de gallium microporeux cristallisé substitué dispersé dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VI (notamment le molybdène ou le tungstène) ont été préalablement introduits au moment du malaxage du support. Elle peut enfin être introduite par une ou plusieurs opérations d'imprégnation du support calciné constitué de phosphate de gallium microporeux cristallisé substitué et de la matrice, par des solutions contenant les précurseurs des oxydes de métaux des groupes VI et/ou VIII, les précurseurs des oxydes de métaux du groupe VIII étant de préférence introduits après ceux du groupe VI ou en même temps que ces derniers.

Dans le cas où les oxydes des métaux sont introduits en plusieurs imprégnations des sels précurseurs correspondants, une étape de calcination intermédiaire du catalyseur devra être effectuée à une température comprise entre 250 et 600°C.

L'imprégnation du molybdène peut être facilitée par ajout d'acide phosphorique dans les solutions de paramolybdate d'ammonium.

Les catalyseurs ainsi obtenus sont utilisés pour l'hydrocraquage de coupes lourdes, et présentent une activité améliorée par rapport à l'art antérieur, et ont de plus une sélectivité améliorée pour la production de distillats moyens de très bonne qualité.

Les charges employées dans le procédé sont des gas-oils, les gas-oils sous vide, des résidus désasphaltés ou hydrotraités ou équivalents. Elles sont constituées au moins à 80% en volume de composés dont les points d'ébullition sont situés entre 350 et 580°C. Elles contiennent des hétéroatomes tels que soufre et azote. Les conditions de l'hydrocraquage telles que, température, pression, taux de recyclage d'hydrogène, vitesse volumique horaire, pourront être très variables en fonction de la nature de la charge, de la qualité des produits désirés, des installations dont dispose le raffineur.

Les températures sont en général supérieures à 230°C et souvent comprises entre 300°C et 430°C. La pression est supérieure à 15MPa et en général supérieure à 30MPa. Le taux de recyclage d'hydrogène est au minimum de 100 et souvent compris entre 260 et 3000 litres d'hydrogène par litre de charge. La vitesse volumique horaire est comprise en général entre 0.2 et 10.

Les résultats qui importent au raffineur sont l'activité et la sélectivité en distillats moyens. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que la conversion peut être augmentée par une élévation de température, mais c'est souvent au détriment de la sélectivité. La sélectivité en distillats moyens s'améliore avec une augmentation de la pression ou du taux de recyclage d'hydrogène, mais ceci au détriment de l'économie du procédé. Ce type de catalyseur permet d'atteindre dans des conditions de marche classique des sélectivités en distillats moyens de point d'ébullition compris entre 150°C et 380°C supérieurs à 65%, et ceci pour des niveaux de conversion, en produits de point d'ébullition inférieur à 380°C, supérieurs à 55% en volume. Ce catalyseur présente de plus, dans ces conditions, une stabilité remarquable. Enfin, du fait de la composition du catalyseur, celui-ci est facilement régénérable.

Les exemple suivants illustrent la présente invention sans toutefois en limiter la portée.

Exemple 1

Préparation du silico-gallophosphate entrant dans la composition du catalyseur utilisé selon l'invention.

Dans cette préparation, on utilise une source de silice de combustion commercialisée sous le nom d'Aerosil par Degussa.

Le sulfate de gallium hydraté est obtenu par dissolution à chaud de gallium, grade 1 de Johnson Matthey, dans de l'acide $H_2SO_4$ concentré en excès, reprise à température ordinaire de la suspension obtenue par l'éthanol à 60% dans l'eau, reprécipitation, dans cette solution refroidie, du sulfate de gallium hydraté par addition d'éther, puis filtration et séchage ménagé.

On dissout dans 8,5 g d'eau distillée, 6,5 g de sulfate de gallium hydraté (le rapport molaire $H_2O/Ga_2(SO_4)_3$ dans le sel est proche de 25). On ajoute 0,36 g de silice Aérosil puis 6,66 g de quinuclidine. On ajoute sous agitation 2,31 g d'acide phosphorique à 85% (Prolabo) puis 0,5 g d'acide fluorhydrique à 40% (Fluka). On continue l'agitation pendant environ 15 minutes. Le pH du mélange réactionnel ainsi obtenu est égal à 5.

La composition chimique du mélange réactionnel est alors la suivante :

$$6 \; Q : 1 \; Ga_2O_3 : 1 \; P_2O_5 : 0,6 \; SiO_2 : 1 \; HF : 64 \; H_2O$$

Le mélange réactionnel obtenu après agitation (pH = 4,5) est placé dans le même type d'autoclave que précédemment et porté à 150 °C pendant 24 heures.

Après réaction, le solide entièrement cristallisé est filtré, lavé à l'eau distillée, séché à 40 °C (produit appelé $A_1$). Le spectre de diffraction des rayons X correspond à celui du tableau 1 de la présente description.

L'analyse chimique du solide conduit à la formule suivante pour la forme anhyde et débarrassée du composé organique :

EP 0 512 914 B1

$Ga_{0,5}P_{0,45}Si_{0,05}O_2$

Exemple 2

Préparation du catalyseur A (conforme à l'invention)

Le produit A1 tel que décrit dans l'exemple 1 est malaxé avec de l'alumine de type SB3 fournie par la société Condéa. La pâte malaxée est ensuite extrudée à travers une filière de diamètre 1.4 mm. Les extrudés sont imprégnés à sec par une solution d'un mélange d'heptamolybdate d'ammonium, de nitrate de nickel et d'acide orthophosphorique, et enfin calcinés sous air à 550°C in-situ dans le réacteur. Les teneurs pondérales en oxydes actifs sont les suivantes (par rapport au catalyseur):
2.5% en poids d'oxyde de phosphore $P_2O_5$
15% en poids d'oxyde de molybdène $MoO_3$
5% en poids d'oxyde de nickel $NiO$

Exemple 3

Préparation du catalyseur B (non conforme à l'invention)

On utilise une silice-alumine préparée au laboratoire contenant 25% en poids de $SiO_2$ et 75% en poids de $Al_2O_3$. On ajoute 3% en poids d'acide nitrique pur à 67% par rapport au poids sec de poudre de silice-alumine afin d'obtenir la peptisation de la poudre. Après malaxage, la pâte obtenue est extrudée à travers une filière de diamètre 1.4mm. Les extrudés sont calcinés puis imprégnés à sec par une solution d'un sel de chlorure de platine tétramine $Pt(NH_3)_4Cl_2$ et enfin calcinés sous air à 550°C. La teneur en platine du catalyseur final est de 0.6% en poids.

Exemple 4 : Evaluation des catalyseurs A et B dans un test d'hydrocraquage selon l'invention.

Les catalyseurs dont les préparations sont décrites aux exemples précédents sont utilisés dans les conditions de l'hydrocraquage sur une charge pétrolière dont les principales caractéristiques sont les suivantes :

| | |
|---|---|
| point initial | 277°C |
| point 10% | 381°C |
| point 50% | 482°C |
| point 90% | 531°C |
| point final | 545°C |
| point d'écoulement | +39°C |
| densité (20/4) | 0.919 |
| Soufre (%poids) | 2.46 |
| Azote (ppm poids) | 930 |

L'unité de test catalytique comprend un réacteur en lit fixe, à circulation ascendante de la charge ("up-flow"), dans lequel est introduit 80 ml de catalyseur. Chacun des catalyseurs est sulfuré par un mélange n-hexane/DMDS + aniline jusqu'à 320°C. La pression totale est de 9 MPa, le débit d'hydrogène est de 1000 litres d'hydrogène gazeux par litre de charge injectée, la vitesse volumique horaire est de 1,0.
Les performances catalytiques sont exprimées par la température qui permet d'atteindre un niveau de conversion brute de 70% et par la sélectivité brute. Ces performances catalytiques sont mesurées sur le catalyseur après qu'une période de stabilisation, généralement au moins 48 heures, ait été respectée.
La conversion brute CB est prise égale à :

$$CB = \frac{\% poids\,380^{-}_{effluents}}{100}$$

11

La sélectivité brute SB est prise égale à :

$$SB = \left( \frac{poids\ 150/380_{effluents}}{poids\ 380^-_{effluents}} \right) * 100$$

| N° exemple | T (°C) (70%CB) | SB (70%CB) |
|---|---|---|
| 2 | 438 | 74 |
| 3 | 402 | 71.5 |

L'utilisation d'un tel silico-gallo-phosphate permet de diminuer la température de conversion brute CB d'une façon substantielle puisqu'un gain de 36°C environ est observé entre le catalyseur sans silico-gallo-phosphate (catalyseur de l'exemple 2) et les catalyseurs en contenant (catalyseur de l'exemple 3).

D'une façon générale, la sélectivité varie fortement avec la conversion. La sélectivité est d'autant plus élevée que la conversion est faible. L'utilisation d'un tel silico-gallo-phosphate permet donc un gain substanciel de température d'iso-conversion sans que ce soit au détriment de la sélectivité en distillats moyens.

Exemple 5 : Evaluation des catalyseurs A et B dans un test d'hydrocraquage basse pression

Les catalyseurs des exemples 2 et 3 ont été comparés dans un test d'hydrocraquage basse pression également appelé hydrocraquage doux. La charge utilisée lors du test catalytique est la même que celle utilisée dans l'exemple 4.

L'unité de test catalytique comprend un réacteur en lit fixe, à circulation ascendante de la charge ("up-flow"), dans lequel est introduit 80 ml de catalyseur. Chacun des catalyseurs est sulfuré par un mélange n-hexane/DMDS + aniline jusqu'à 320°C. La pression totale est de 5 MPa, le débit d'hydrogène est de 500 litres d'hydrogène gazeux par litre de charge injectée, la vitesse volumique horaire est de 0,5.

Les performances catalytiques sont exprimées par conversion brute obtenue à une température donnée (ici, 400°C) et par la sélectivité brute pour une conversion brute égale à 50%. Ces performances catalytiques sont mesurées sur le catalyseur après qu'une période de stabilisation, généralement au moins 48 heures, ait été respectée.

La conversion brute CB est prise égale à :

$$CB = \frac{\%\ poids\ 380^+_{effluents}}{100}$$

La sélectivité brute SB est prise égale à :

$$SB = \left( \frac{poids\ 150/380_{effluents}}{poids\ 380^-_{effluents}} \right) * 100$$

| N° exemple | CB à 400°C | SB (50%CB) |
|---|---|---|
| 2 | 38.3 | 81.0 |
| 3 | 41.5 | 80.9 |

L'utilisation d'un tel silico-gallo-phosphate (catalyseur de l'exemple 3) permet un gain en conversion de 3.2% environ à 400°C par rapport au catalyseur n'en contenant pas (catalyseur de l'exemple 2). Les sélectivités obtenues pour 50% de conversion brute sont tout à fait comparables ce qui indique que le catalyseur contenant un tel silico-gallo-phosphate présente une sélectivité équivalente à une silice-alumine.

**Revendications**

1. Utilisation dans un procédé d'hydrocraquage d'une charge hydrocarbonée d'un catalyseur renfermant :
   a) de 20 à 95 % en poids d'au moins une matrice,
   b) de 1 à 60 % en poids d'au moins un phosphate de gallium microporeux cristallisé substitué par un élément choisi dans le groupe formé par les éléments : Li, Be, Co, Mg, Mn, Zn, Al, B, Cr, Ge, Si, Ti, As et V,
   caractérisé par les propriétés suivantes :
   a) la formule générale approchée suivante :
   $R_r$ $Ga_g$ $P_p$ $X_x$ $O_2$ $F_f$, h $H_2O$ où la somme de g, p et x est égale à 1.
   g est un nombre compris entre 0,3 et 0,5
   p est un nombre compris entre 0,3 et 0,5
   x est un nombre compris entre 0,01 et 0,4
   r est un nombre compris entre 0,01 et 0,2
   f est un nombre compris entre 0,01 et 0,2
   h varie suivant le degré d'hydratation du solide entre 0 et 0,5
   R est un composé organique, choisi dans le groupe formé par les amines cycliques
   X est un hétéroatome choisi dans le groupe formé par les éléments : Li, Be, Co, Mg, Mn, Zn, Al, B, Cr, Fe, Ge, Si, Ti, As, et V
   b) un diagramme de diffraction des rayons X présenté dans le tableau 1,
   c) de 0 à 30 % en poids de zéolithe Y, de structure faujasite, forme hydrogène,
   d) au moins un métal du groupe VIII de la Classification Périodique des Éléments.

2. Utilisation selon la revendication 1 d'un catalyseur renfermant en outre au moins un métal du groupe VI de la Classification Périodique des Éléments.

3. Utilisation selon l'une des revendications 1 à 2 d'un catalyseur tel que ladite matrice est choisie dans le groupe formé par l'alumine, la silice, la magnésie, l'argile, l'oxyde de titane, la zircone, les phosphates d'aluminium, de titane et de zirconium, les combinaisons de deux au moins de ces composés et les combinaisons alumine-oxyde de bore.

4. Utilisation selon l'une des revendications 1 à 3 d'un catalyseur tel que g est un nombre compris entre 0,4 et 0,5 et x un nombre compris entre 0,01 et 0,2.

5. Utilisation selon l'une des revendications 1 à 4 d'un catalyseur tel que R est la quinuclidine.

6. Utilisation selon l'une des revendications 1 à 5 d'un catalyseur tel que X est Si.

**Claims**

1. In a process for hydrocracking a hydrocarbon feed, the use of a catalyst containing:
   a) 20% to 95% by weight of at least one matrix;
   b) 1% to 60% by weight of at least one microporous crystalline gallium phosphate substituted with an element selected from the group formed by the following elements: Li, Be, Co, Mg, Mn, Zn, Al, Fe, B, Cr, Ge, Si, Ti, As and V, characterised by the following properties:
   a) the following approximate general formula:

   $R_r$ $Ga_g$ $P_p$ $X_x$ $O_2$ $F_f$, h$H_2O$

   where the sum of g, p and x is equal to 1,
   g is a number between 0.3 and 0.5,
   p is a number between 0.3 and 0.5;
   x is a number between 0.01 and 0.4,

r is a number between 0.01 and 0.2,

f is a number between 0.01 and 0.2,

h depends on the degree of hydration of the solid and is between 0 and 0.5;

R is an organic compound selected from the group formed by cyclic amines,

X is a heterotaom selected from the group formed by the elements: Li, Be, Co, Mg, Mn, Zn, Al, B, Cr, Fe, Ge, Si, Ti, As and V,

b) an X ray diffraction pattern as shown in Table 1,

c) 0 to 30% by weight of at least one Y zeolite with a faujasite structure, in its hydrogen form,

d) at least one metal from group VIII of the periodic classification of the elements.

2. The use of a catalyst as claimed in claim 1, further containing at least one metal from group VI of the periodic classification of the elements.

3. The use of a catalyst as claimed in claim 1 or claim 2, in which said matrix is selected from the group formed by alumina, silica, magnesia, clay, titanium oxide, zirconia, aluminium, titanium and zirconium phosphates, combinations of at least two of these compounds and alumina - boron oxide combinations.

4. The use of a catalyst as claimed in any one of claims 1 to 3, in which g is a number between 0.4 and 0.5 and x is a number between 0.01 and 0.2.

5. The use of a catalyst as claimed in any one of claims 1 to 4, in which R is quinuclidine.

6. The use of a catalyst as claimed in any one of claims 1 to 5, in which X is Si.

**Patentansprüche**

1. Verwendung eines Katalysators in einem Hydrocrackverfahren einer kohlenwasserstoffhaltigen Beschickung, der umfaßt:

a) 20 bis 95 Gew.% wenigstens einer Matrix,

b) 1 bis 60 Gew.% wenigstens eines kristallisierten, mikroporösen Galliumphosphates, das durch ein Element substituiert ist, das aus der durch die Elemente Li, Be, Co, Mg, Mn, Zn, Fe, Al, B, Cr, Ge, Si, Ti, As und V gebildeten Gruppe ausgewählt ist, charakterisiert durch die folgenden Eigenschaften:

a) die folgende allgemeine Überschlagsformel:

$R_r Ga_g P_p X_x O_2 F_f$, h $H_2O$, in der die Summe aus g, p und x gleich 1 ist,

g eine zwischen 0,3 und 0,5 liegende Zahl ist,

p eine zwischen 0,3 und 0,5 liegende Zahl ist,

x eine zwischen 0,01 und 0,4 liegende Zahl ist,

r eine zwischen 0,01 und 0,2 liegende Zahl ist,

f eine zwischen 0,01 und 0,2 liegende Zahl ist,

h gemäß dem Hydratisierungsgrad der Feststoffe zwischen 0 und 0,5 variiert,

R eine organische Verbindung ist, die aus der durch die cyclischen Amine gebildeten Gruppe ausgewählt ist,

X ein Heteroatom ist, das aus der durch die Elemente Li, Be, Co, Mg, Mn, Zn, Al, B, Cr, Fe, Ge, Si, Ti, As und V gebildeten Gruppe ausgewählt ist;

b) ein in Tabelle 1 dargestelltes Röntgenbeugungsdiagramm,

c) 0 bis 30 Gew.% Zeolith Y mit Faujasit-Struktur in der Wasserstofform,

d) wenigstens ein Metall der Gruppe VIII des Periodensystems.

2. Verwendung eines Katalysators nach Anspruch 1, der außerdem wenigstens ein Metall der Gruppe VI des Periodensystems umfaßt.

3. Verwendung eines Katalyasators, nach einem der Ansprüche 1 bis 2, so daß die Matrix aus der Gruppe ausgewählt ist, die aus Aluminiumoxid, Siliciumdioxid, Magnesiumoxid, Ton, Titanoxid, Zirkonoxid, den Aluminium-, Titan- und Zirkonphosphaten, den Kombinationen aus zwei wenigstens dieser Verbindungen und den Kombinationen Aluminiumoxid-Boroxid gebildet ist.

4. Verwendung eines Katalysators, gemäß einem der Ansprüche 1 bis 3, so daß g eine zwischen 0,4 und 0,5 liegende Zahl ist und x eine zwischen 0,01 und 0,2 liegende Zahl ist.

5. Verwendung eines Katalysators, gemäß einem der Ansprüche 1 bis 4, so daß R ein Chinuclidin ist.

6. Verwendung eines Katalysators nach einem der Ansprüche 1 bis 5, so daß X Si ist.